# EUROPEAN PATENT APPLICATION

(11) **EP 4 656 458 A1**
(43) Date of publication of application: **03.12.2025**
(21) Application number: 24178532.8
(22) Date of filing: 28.05.2024
(51) Int. Cl.: B60Q 1/28, F21S 43/14, F21S 43/15, F21S 43/20, F21S 43/31, F21S 43/40, F21S 45/50, F21W 104/00

(54) **LIGHTING DEVICE FOR A VEHICLE**

(71) Applicant: ZKW Group GmbH, 3250 Wieselburg (AT)
(72) Inventor: Zeuner, Markus, 3240 Mank (AT)
(74) Representative: Patentanwaltskanzlei Matschnig & Forsthuber OG

(57) **Abstract**

A lighting device (1) for vehicles comprises a housing (2) with an interior housing space (20), comprising an opaque housing body (3) and a transparent cover lens (4). Reflecting surfaces (5; 5a, 5b, 5c) within the housing space (20) redirect light from at least one light source (6; 6a, 6b, 6c) towards the cover lens (4). Each reflecting surface (5; 5a, 5b, 5c) is situated inside the interior housing space (20). The housing features a first opening (9) sealed by the cover lens (4) and at least one second opening (10) closed by a light source support element (11). Reflective and non-reflective bodies (7, 8) are integrally formed to constitute the housing body (3).

## Description

The present invention relates to a lighting device for a vehicle, in particular a motor vehicle, wherein the lighting device comprises:
- a housing with at least one interior housing space, the housing comprising
   - a housing body which is opaque, in particular to visible light, and
   - a cover lens which is transparent, in particular to visible light, and
- at least one reflecting surface, which is arranged within the at least one interior housing space, and
- at least one light source, which is assigned to the at least one reflecting surface and which is arranged within the at least one interior housing space and is configured to generate light and to radiate it towards its reflecting surface, wherein the reflecting surface reflects the incident light towards the cover lens, and wherein

each reflecting surface is arranged inside an interior housing space, wherein
the housing body comprises a first opening, which first opening is closed by the cover lens, and wherein
the housing body comprises at least one second opening, which at least one second opening is closed by a light source support element, which light source support element carries the at least one light source.

Illuminated parts of the body of a motor vehicle, for example exterior bumpers on motor vehicles are a relatively new concept in the realm of vehicle lighting and design. This technology is gaining popularity due to its aesthetic and functional benefits.

Illuminated parts such as bumpers offer a way to individualize and enhance the appearance of a vehicle. They can make a car look more futuristic and modern. LED technology is often used to enable various light patterns and colors, giving designers more freedom to create unique and creative styles.

An advantage of illuminated bumpers may be the increased visibility of the vehicle, especially in low light conditions. Additional lighting, in particular at the front or rear of the vehicle makes it more noticeable to other road users, which can contribute to improved road safety. Illuminated bumpers can be particularly helpful during early morning hours, in fog, or at dusk.

The technology behind illuminated bumpers is primarily based on LED lighting. LEDs are energy-efficient, long-lasting, and offer high light output. Modern systems can also be intelligently controlled to adjust the light intensity or color based on specific conditions (e.g., time of day or weather).

Reflectors are often used, which are illuminated by the LED(s), whereby the reflectors are perceived as illuminated surfaces from the outside. In the direction of light propagation downstream of such a reflector, a cover lens, in particular with optical structures, or a diffusing or filter lens can be arranged, whereby the homogeneity can be increased so that the illuminated surface appears uniformly illuminated over its entire surface.

As with any new technology in the automotive sector, there are regulatory challenges for illuminated bumpers. The lighting must meet legal requirements and standards to ensure it does not dazzle or distract other road users. Different countries have different regulations regarding vehicle lighting, and manufacturers need to consider these when bringing illuminated bumpers to market.

It is an object of the invention to provide a lighting device for a vehicle, in particular for a component, especially for a vehicle body component, wherein the lighting device emits light into the outer space via a reflector.

This object is solved with a lighting device described at the beginning, wherein according to the invention the at least one reflecting surface is arranged on at least one reflector body, wherein said at least one reflector body and a non-reflector body are formed in one piece, the at least one reflector body and the non-reflector body forming the housing body.

In the state of the art, the reflector of such lighting device is designed as a separate component. This separate additional component causes costs (production, storage, assembly of the lighting device) and additional weight. A separate component often requires additional installation space.

With the invention, these disadvantages can be eliminated or at least mitigated. The design of the lighting device can be simplified.

In particular, since the reflectors used in applications as described above are often not used to generate a targeted image or light distribution, but are primarily intended to appear as a luminous surface, the reflector surface can be designed relatively simply and the invention, in which the housing with the reflector or with the reflective surface is designed as a single component, is therefore particularly suitable for such applications.

It may be provided that the housing body comprises a first opening, which first opening is closed by the cover lens.

The housing body can be made of a reflecting material, for example a white or grey material, or the reflector body comprises a metallized surface on a reflector body surface facing the interior housing space, which metallized surface forms the reflecting surface.

It can also be provided that the reflecting surface is painted on the housing body in a reflective color or in white.

Preferably, the at least one light source is arranged above the reflecting surface when the lighting device is installed in a vehicle.

Arranging the at least on light source above the at least one reflecting surface provides the advantage, that moisture or water (when driving through water varnishes or streams), which may accumulate in the lower area of the lighting device, cannot damage the light source or a PCB of the light source(s).

The reflecting surface may be configured in a way that the light reflected by the reflecting surface illuminates the entire cover lens, wherein preferably the cover lens is homogeneously illuminated.

Preferably, the cover lens and/or the reflecting surface comprises light scattering structures.

For example, the scattering structures are in the form of a grain.

The cover lens may be positively tied to the housing body or the cover lens may be bonded to the housing body. This design allows the electronics, e.g. the light source and/or the PCB, to be replaced.

By mounting the cover lens in the first opening in this way, the interior housing space is sealed against an exterior space of the lighting device.

Furthermore, it may be provided that the at least one light source support element is, in particular detachably, mounted in the second opening from outside the interior housing space.

Preferably, sealing means are provided between the housing body surrounding the second opening and the light source support element, so that the interior housing space is sealed off from the exterior space of the lighting device.

The sealing means may be circumferentially and continuously arranged around the second opening.

Alternatively, the light source support element may be glued to the housing body.

Furthermore, the invention relates to a panel for a vehicle, for example for motor vehicle, in particular to a vehicle body panel, for example a radiator grille or a bumper, comprising at least on lighting device as described above.

It may be provided that the at least one lighting device is mounted on the panel with mounting means.

It may also be provided that the lighting device is integrated into a panel of the vehicle, in particular into a panel of the vehicle body.

Furthermore, the invention relates to a vehicle, in particular a motor vehicle comprising at least one lighting device as described or at least one panel as described above.

The invention also relates to a vehicle, in particular a motor vehicle comprising at least one lighting device as described above and at least one holder, wherein said at least one holder may be part of a vehicle body or may be mounted to the vehicle body, and wherein the lighting device is mounted on the holder with mounting means.

In this case, the at least one lighting device may be installed behind a panel of the vehicle body.

The panel, in particular the pane of the vehicle body, in general may be provided on the front or rear of a vehicle.

The invention is explained in more detail below with reference to the drawing:
Fig. 1 shows a schematic longitudinal section along a vertical longitudinal plane through a lighting device according to the invention, mounted on a body part of a motor vehicle,
Fig. 2 shows a perspective, schematic view of the lighting device from **Figure** 1 with a view of the upper area of the lighting device,
Fig. 3 shows the lighting device from **Figure 1****,** mounted on a vehicle-side mounting element,
Fig. 4 shows an embodiment of a lighting device with several reflecting surfaces, and
Fig. 5 schematically shows an example of the appearance of a light-reflecting reflecting surface for a viewer looking at the cover lens of the lighting device from the outside.

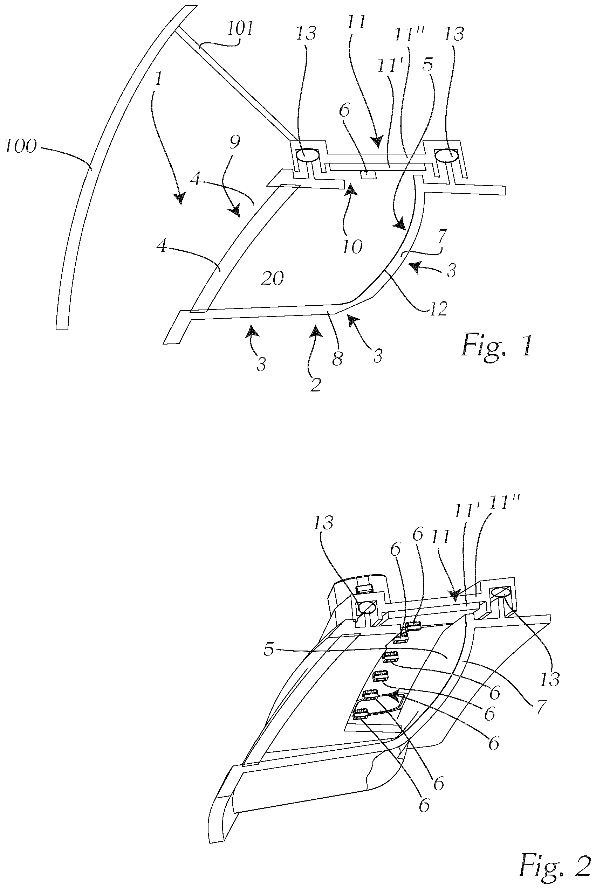

**Figure 1** and **Figure 2** show a lighting device 1 for a vehicle, in particular a motor vehicle, wherein the lighting device 1 comprises a housing 2 with an interior housing space 20.

The housing 2 comprises a housing body 3 which is opaque, in particular to visible light, and a cover lens 4 which is transparent, in particular to visible light, and a reflecting surface 5. The reflecting surface 5 is arranged within the interior housing space 20.

The housing body 3 comprises a first opening 9, which is closed by the cover lens 4.

The lighting device 1 comprises one or preferably more light sources 6, which are assigned to the reflecting surface 5. The one or more light sources 6 are arranged within the interior housing space 20 and are configured to generate light and to radiate it towards its reflecting surface 5, wherein the reflecting surface 5 reflects the incident light towards the cover lens 4.

For example, the light sources are each LEDs or each light source comprises one or more LEDs.

Furthermore, the housing body 3 comprises a second opening 10, which is closed by a light source support element 11, which light source support element 11 carries the at least one light source 6.

For example, the light source support element 11 comprises a cover element 11", for example made from plastics, the cover element 11" carrying a circuit board 11' (PCB), on which the at least one light source 6 is arranged. In a mounted state of the support element, the cover element 11" closes the second opening 10, and the circuit board 11' and the at least one light source 6 are arranged in the interior housing space 20.

**Figure 2** shows the support element 11 in a perspective view and it is easy to see that the support element 11 carries several light sources 6, in the case shown six light sources 6.

As explained above, the housing 2 comprises an interior housing space 20. In detail, the housing body 3, cover lens 4 and support element 11 for the at least one light source form said housing 2 and are enclosing the interior housing space 20.

According to the invention the reflecting surface 5 is arranged on a reflector body 7, wherein said reflector body 7 and a non-reflector body 8 are formed in one piece, the reflector body 7 and the non-reflector body 8 forming the housing body 3.

According to the state of the art, the non-reflector body forms the housing body, and the reflector body is a separate component, which must be mounted in relation to the housing when assembling the lighting device. According to the invention, reflector body 7 and non-reflector body 8 form a single component, the housing body 3.

The housing body 3 can be made of a reflecting material, for example a white or grey material, so that the reflecting surface 5 is already realized by the material properties of the housing body 3 itself.

It may also be provided that the reflector body 7 comprises a metallized surface on a reflector body surface 12 facing the interior housing space, which metallized surface forms the reflecting surface 5. The reflector body surface 12 may be coated with the metallized surface.

It may also be provided that the reflecting surface is painted on the housing body in a reflective color or in white.

Preferably, the at least one light source 6 is arranged above the reflecting surface 5 when the lighting device 1 is installed in a vehicle. Arranging the at least on light source above the reflecting surface 5 provides the advantage, that moisture or water (when driving through water varnishes or streams), which may accumulate in the lower area of the lighting device, cannot damage the light source or the PCB.

The reflecting surface 5 may be configured in a way that the light reflected by the reflecting surface 5 illuminates the entire cover lens 4, wherein preferably the cover lens 4 is homogeneously illuminated.

For example, reflecting surface is of a parabolic reflector type; the at least one light source at the focal point of the reflecting surface - cover lens 4 is illuminated homogeneously.

Preferably, the cover lens 4 and/or the reflecting surface 5 comprises light scattering structures to improve the homogeneity of the appearance of the luminous surface. For example, the scattering structures are in the form of a grain.

The cover lens 4 may be positively tied to the housing body 3 or the cover lens 4 may be bonded to the housing body 3. By mounting the cover lens 4 in the first opening 9 in this way, the interior housing space is sealed against an exterior space of the lighting device.

Furthermore, it may be provided that the light source support element 11 is, in particular detachably, mounted in the second opening 10 from outside the interior housing space 20. This design allows the electronics, e.g. the light source and/or the PCB, to be replaced. Preferably, sealing means 13 are provided between the housing body 3 surrounding the second opening 10 and the support element 11, so that the interior housing space 20 is sealed off from the exterior space of the lighting device 1. The sealing means 13 may be circumferentially and continuously arranged around the second opening 10.

Alternatively, the light source support element may be glued to the housing body.

As an example, **Figure 1** shows the assembly of the lighting device 1 on a panel 100, in particular a vehicle body panel of a vehicle, in particular a motor vehicle. For example, the panel 100 is a radiator grille or a bumper. **Figure 1** schematically shows mounting means 101 which are provided for mounting the lighting device on the panel 100.

The panel 100 may be a component which, for example, is provided on the front or rear of a vehicle.

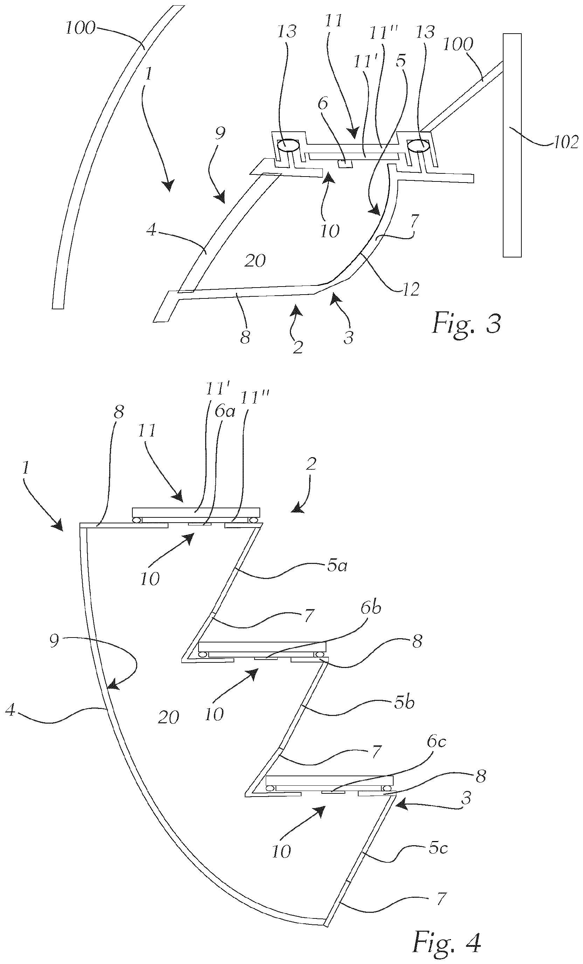

**Figure 3** shows the lighting device 1 of **Figure 1 and 2****,** mounted on a separate holder102, wherein said holder 102 may be part of a vehicle body or is mounted to a vehicle body, and wherein the lighting device 1 is mounted on the holder 102 with mounting means 101. A panel 100, for example a vehicle body panel 100, such as a radiator grille or bumper, is mounted in front of the lighting device 1.

**Figure 4** shows an embodiment of the lighting device 1 which comprises more than one, in the shown embodiment three reflecting surfaces 5a, 5b, 5c. The reflecting surface 5a, 5b, 5c are arranged in the interior spacing 20 of a housing 2. The housing body 3 comprises a non-reflector body 8 and a reflector body 7 or reflector bodies. The reflecting surfaces 5a, 5b, 5c are arranged on said reflector body 7 or reflector bodies.

According to the invention the reflector body 7 or reflector bodies and the non-reflector body 8 are formed in one piece, the reflector body 7 (or reflector bodies) and the non-reflector body 8 forming the housing body 3.

The housing body 3 comprises three second openings 10. Each of these second openings 10 is closed with its own light source support element 11. Each of the light source support elements 11 carries at least one light source 6a, 6b, 6c. The light sources 6a, 6b, 6c of these light source support elements 11 are arranged to emit light on the corresponding reflecting surfaces 5.

The other technical explanations in connection with **Figures 1 - 3** also apply to the embodiment shown in **Figure 4****.**

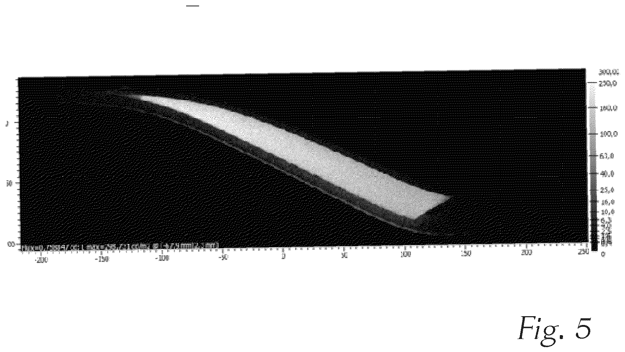

**Figure 5** schematically shows an example of the appearance of a light-reflecting reflecting surface for a viewer looking at the cover lens of the lighting device from the outside when the light source is switched on

### LIST OF REFERENCE SIGNS

- 1: lighting device
- 2: housing
- 3: housing body
- 4: cover lens
- 5, 5a, 5b, 5c: reflecting surface
- 6; 6a, 6b, 6c: light source
- 7: reflector body
- 8: non-reflector body
- 9: first opening
- 10: second opening
- 11: light source support element
- 11': PCB, printed circuit board
- 11": cover element
- 12: reflector body surface
- 13: sealing means
- 20: interior housing space
- 100: panel
- 101: mounting means
- 102: holder

## Claims

1. Lighting device (1) for a vehicle, in particular a motor vehicle, wherein the lighting device (1) comprises:
- a housing (2) with at least one interior housing space (20), the housing (2) comprising
• a housing body (3) which is opaque, in particular to visible light, and
• a cover lens (4) which is transparent, in particular to visible light, and
- at least one reflecting surface (5; 5a, 5b, 5c), which is arranged within the at least one interior housing space (20), and
- at least one light source (6; 6a, 6b, 6c), which is assigned to the at least one reflecting surface (5; 5a, 5b, 5c) and which is arranged within the at least one interior housing space (20) and is configured to generate light and to radiate it towards its reflecting surface (5; 5a, 5b, 5c), wherein the reflecting surface (5; 5a, 5b, 5c) reflects the incident light towards the cover lens (4), and wherein
each reflecting surface (5; 5a, 5b, 5c) is arranged inside an interior housing space (20), wherein
the housing body (3) comprises a first opening (9), which first opening (9) is closed by the cover lens (4), and wherein
the housing body (3) comprises at least one second opening (10), which at least one second opening (10) is closed by a light source support element (11), which light source support element (11) carries the at least one light source (6), and wherein
the at least one reflecting surface (5; 5a, 5b, 5c) is arranged on at least one reflector body (7), wherein said at least one reflector body (7) and a non-reflector body (8) are formed in one piece, the at least one reflector body (7) and the non-reflector body (8) forming the housing body (3).

2. Lighting device according to claim 1, **wherein** the housing body (3) is made of a reflecting material, for example a white or grey material, or the reflector body (7) comprises a metallized surface on a reflector body surface (12) facing the interior housing space, which metallized surface forms the reflecting surface (5).

3. Lighting device according to claim 1 or 2, **wherein** the at least one light source (6) is arranged above the reflecting surface (5; 5a, 5b, 5c) when the lighting device (1) is installed in a vehicle.

4. Lighting device according to anyone of claims 1 to 3, **wherein** the reflecting surface (5; 5a, 5b, 5c) is configured in a way that the light reflected by the reflecting surface (5; 5a, 5b, 5c) illuminates the entire cover lens (4), wherein preferably the cover lens (4) is homogeneously illuminated.

5. Lighting device according to anyone of claims 1 to 4, **wherein** the cover lens (4) and/or the reflecting surface (5; 5a, 5b, 5c) comprises light scattering structures.

6. Lighting device according to anyone of claims 1 to 5, **wherein** the cover lens (4) is positively tied to the housing body (3) or **wherein** the cover lens (4) is bonded to the housing body (3).

7. Lighting device according to anyone of claims 1 to 6, **wherein** the light source support element (11) is, in particular detachably, mounted in the second opening (10) from outside the interior housing space.

8. Lighting device according to claim 7, **wherein** sealing means (13) are provided between the housing body (3) surrounding the second opening (10) and the light source support element (11), so that the interior housing space is sealed off from the exterior space of the lighting device (1).

9. Lighting device according to claim 7 or 8, **wherein** the sealing means (13) are arranged circumferentially and continuously around the second opening (10).

10. Panel (100) for a vehicle, for example for motor vehicle, in particular vehicle body panel, for example a radiator grille or a bumper, comprising at least on lighting device (1) according to anyone of claims 1 to 9.

11. Panel (100) according to claim 10, wherein the at least one lighting device (1) is mounted on the panel (100) with mounting means (101).

12. Vehicle, in particular a motor vehicle comprising at least one lighting device (1) according to any one of claims 1 to 9 or at least one panel (100) according to claim 10 or 11.

13. Vehicle, in particular a motor vehicle comprising a lighting device (1) according to any one of claims 1 to 9 and at least one holder (102), wherein said at least one holder (102) is part of a vehicle body or is mounted to the vehicle body, and wherein the lighting device (1) is mounted on the holder (102) with mounting means (101).
